# EUROPÄISCHE PATENTANMELDUNG

(11) **EP 4 212 605 A1**
(43) Veröffentlichungstag der Anmeldung: **19.07.2023**
(21) Anmeldenummer: 23150206.3
(22) Anmeldetag: 03.01.2023
(51) Int. Cl.: C10J 3/78, B01J 19/10, C02F 1/36

(54) **VERFAHREN ZUR HERSTELLUNG VON WASSERSTOFF AUS BIOMASSE MITTELS SCWG**

(30) Priorität: 13.01.2022 DE 102022100746
(71) Anmelder: HAGO Druck & Medien GmbH, 76307 Karlsbad (DE)
(72) Erfinder: Gossenberger, Markus, 76307 Karlsbad (DE)
(74) Vertreter: Ziebig Hengelhaupt Intellectual Property Attorneys Patentanwaltsanwaltskanzlei PartGmbB

(57) **Zusammenfassung**

Die vorliegende Erfindung betrifft ein Verfahren zum Erzeugen von Biogas, vorzugsweise von Wasserstoff und Kohlenstoffdioxid, aus Biomasse, welches die folgenden Schritte umfasst:
Zunächst wird eine Ultraschallbehandlung zur Desintegration der Biomasse durchgeführt, wobei die Frequenz der Ultraschallbehandlung mindestens 20 kHz beträgt, im Anschluss daran findet ein Aufheizen der verbleibenden Biomasse auf über 600 °C bei einem Druck größer als 25 MPa statt, um dann final die entstandenen Gase zu separieren, wobei der Wasserstoff vorzugsweise bei einem Druck im Bereich von 8 bis 22 MPa gelagert wird.

## Beschreibung

### TECHNISCHES GEBIET DER ERFINDUNG

Die Erfindung zielt ab auf die Verwertung von lokalen Bioabfällen, Kantinenabfällen, Gärresten, Grünabfällen, Biertreber, Obst- und Gemüseabfällen. Dabei werden auf innovative Weise Phosphor-, Stickstoff- und Kalium-Anteile aus der Biomasse recycelt, bevor die Biomasse zur Wasserstoffgewinnung mittels Vergasung organischer Materie in überkritischem Wasser gewonnen wird. Es werden ferner auf überraschende Art und Weise Mikroplastik-Kontaminationen aus den Bioabfällen rückstandslos entfernt. Zusätzlich erlaubt das erfindungsgemäße Verfahren die Nutzung der im Verlauf der hydrothermalen Vergasung entstehenden Kohlenwasserstoff-Anteile in einem Blockheizkraftwerk zur Strom- und Wärmegewinnung. Ferner wird auf innovative Weise Kohlenstoffdioxid hergestellt. In Ergänzung dazu, oder alternativ kann auch der Betrieb einer Brennstoffzelle realisiert werden.

Das erfindungsgemäße Verfahren kann kompakt und unterirdisch in einem multifunktionalen Gebäude durchgeführt und realisiert werden. Für die Anlage zur Durchführung des Verfahrens ist das Untergeschoss vorgesehen, überirdisch befinden sich die Be- und Entladeeinheiten und ggf. Produktgasspeicher, sowie weitere Gewerbe- und Büroräume.

Beispielsweise ermöglicht dies eine Minimierung des Logistikaufwands, da eine angrenzende Tankstelle das Produktgas Wasserstoff und/oder Kohlenstoffdioxid unmittelbare vermarken kann. Ferner würde dadurch auch eine Reduktion des Energieverbrauchs erreicht, weil weiterer Transport des Produktgases vermieden würde. Rechnerisch reduziert das erfindungsgemäße Verfahren CO₂-Emissionen, da entstehendes CO₂ abgeschieden und separat gespeichert wird. Es wird der Atmosphäre CO₂ entnommen, weil kürzlich durch Pflanzen gebundenes CO₂ nicht wieder in die Atmosphäre freigesetzt wird.

### HINTERGRUND DER ERFINDUNG

Eine effiziente Technologie zur Erzeugung eines sauberen und hochkalorischen Produktgases aus Biomasse ist die Vergasung von Biomasse in überkritischem Wasser. Die Vergasung von Biomasse in überkritischem Wasser wurde in den 1970er Jahren am MIT in den USA experimentell erforscht. Eine kommerzielle Umsetzung der Technologie ist jedoch trotz der Vielzahl an publizierten wissenschaftlichen Arbeiten noch nicht bekannt.

Die Mehrzahl der wissenschaftlichen Arbeiten zu diesem Thema befasst sich mit der technischen und wirtschaftlichen Bewertung der hydrothermalen Vergasung, ohne dabei die Vergasung in überkritischem Wasser bei hohen Temperaturen selbst zu thematisieren.

Das Wasser hat dabei eine besondere Bedeutung, da es Reaktions- und Lösungsmedium zugleich ist. Wasser ist ebenso als Reaktant und Katalysator an hydrothermalen Reaktionen beteiligt. Dies fußt auf der Grundlage, dass wesentliche Eigenschaften des Wassers sich mit zunehmenden Temperaturen und Drücken ändern. Das ermöglicht die Anwendung verschiedener hydrothermaler Verfahren. Generell herrscht ein Umgebungsdruck von ca. 1013 Pa, bei dem Wasser bei einer Temperatur von 100 °C siedet. Um Wasser auch bei höheren Temperaturen in der flüssigen Phase zu halten, muss man entsprechend der Dampfdruckkurve von H₂O der Druck erhöht werden. Der kritische Punkt liegt bei T=374 °C und p=22,1 MPa. Ab diesen Bedingungen ist es nicht mehr möglich, Wasser durch weitere Druckerhöhung in den flüssigen Aggregatzustand zu bringen.

Wasser bildet dann ein homogenes, einphasiges Fluid und wird als überkritisches Wasser bezeichnet. Es liegt dann nicht mehr in Abhängigkeit von Druck und Temperatur in flüssiger oder gasförmiger Form vor.

Die relative dielektrische Permittivität ε von Wasser, welche das Lösungsmittelverhalten bestimmt, sinkt mit steigender Temperatur, bis sie im überkritischen Zustand zwischen 10 und 25 liegt. Dieser Bereich ist bei Normbedingungen typisch für dipolare Flüssigkeiten wie Aceton oder Acetonitril. Damit beginnt das Wasser sich in ein unpolares Lösungsmittel zu wandeln. Damit wird eine vollständige Mischbarkeit mit anorganischen Gasen, sowie eine gute Mischbarkeit mit organischen Substanzen erreicht. Salze sind dann entsprechend nicht mehr löslich. Es ist bekannt, dass die thermophysikalischen Eigenschaften des Wassers von Druck und Temperatur abhängen. Daher ist es möglich, durch die Wahl bestimmter Prozessparameter hydrothermale Verfahren zu nutzen, um aus Biomasse selektiv verschiedene Produkte zu erzeugen. Differenziert wird dabei zwischen der Hydrothermalen Karbonisierung, der Hydrothermalen Verflüssigung sowie der Hydrothermalen Vergasung.

Die Hydrothermale Karbonisierung erfolgt generell bei Temperaturen zwischen 180 °C und 250 °C und Drücken zwischen 1 und 4 MPa. Die Verweilzeiten belaufen sich auf einige Stunden, während sich die wässrige Biomasse durch Dehydratisierung und Decarboxylierung unter Wärmeabgabe in einen Kohleschlamm umwandelt, welcher nach Entwässerung und Trocknung als kohleartiger Feststoff übrigbleibt.

Des Weiteren entstehen während dieses Prozesses CO₂, H₂O sowie in Wasser gelöste organische Produkte.

Die Hydrothermalen Verflüssigung findet zwischen 280 - 370 °C statt, sowie bei Drücken von 10 - 25 MPa. Erhalten wird ein hochviskoser Teer, welcher einen hohen Heizwert aufweist. Es werden unter optimalen Bedingungen keine Feststoffe gebildet. Der Teer ist besonders geeignet für die Erzeugung spezieller Kraftstoffe, als Brennstoff sowie als Rohmaterial für die chemische Industrie.

Die Hydrothermale Vergasung kann sowohl im unterkritischen, nahkritischen als auch im überkritischen Bereich durchgeführt werden. Die einzelnen Prozessvarianten unterscheiden sich dabei bezüglich ihres Katalysatoreinsatzes, der Zusammensetzung des Produktgases und des umsetzbaren Eduktes.

Bei unterkritischen Bedingungen ist es möglich, mithilfe von Edelmetallkatalysatoren Wasserstoff aus Biomasse zu erhalten.

Im nahkritischen Bereich ist die Bildung von Methan thermodynamisch bevorzugt. Auch bei diesem Temperaturniveau sind Edelmetall-Katalysatoren nötig, um Biomasse zu vergasen. Methan kann dabei sowohl unterhalb als auch oberhalb des kritischen Punktes erzeugt werden.

Während die Vergasung im unterkritischem Bereich die Probleme durch Salzabscheidungen - welche im überkritischen Bereich auftreten - umgeht und die damit einhergehende Verstopfungsgefahr der Anlage umgeht, nutzt das überkritische Verfahren die bessere Löslichkeit des überkritischen Wassers für organische Substanzen, wobei auch hier Salze ausfallen und die Anlage verstopfen, Korrosionsvorgänge beschleunigen und die Effizienz des Verfahrens reduzieren.

### STAND DER TECHNIK

Verfahren, bei denen aus Biomasse Biomethan und Dünger in Form einer Nährstofflösung gewonnen werden sind u. a. aus der DE 10 2016 014 103 A1 bekannt. Dabei wird die Biomasse zunächst zerkleinert, auf eine Partikelgröße von weniger als 0,1 mm, danach mechanisch, thermisch, oder chemisch aufgeschlossen und im Anschluss daran wird mittels mehrerer, gekoppelter Verfahrensschritte Mineraldünger und Biomethan mit wenigstens 95 % Methangehalt als Energieträger gewonnen, ohne dass Kohlendioxid in die Atmosphäre abgegeben wird.

Auch aus der EP 2 227 324 B1 ist ein Verfahren zur Vergasung von kohlenstoffhaltigen Verbindungen bekannt, wobei hauptsächlich CO und H₂ erhalten werden. Das Verfahren umfasst einen ersten Schritt zur Torrefikationspyrolyse, wobei Kohle und Pyrolysegas in einem Solar-Mikrowellenreaktor entstehen. Im Anschluss werden in einen zweiten Schritt die Kohle und die Pyrolysegase in CO und H₂, durch chemische Redox-Reaktionen umgewandelt.

Die WO 2012 030 215 A1 offenbart ein Verfahren zur Hydrobehandlung von pflanzlicher Biomasse. Dabei wird die pflanzliche Biomasse einer Hydrobehandlung in einem ersten Reaktor unterzogen, wobei die Hydrobehandlung das In-Kontakt-Bringen der pflanzlichen Biomasse in einem wässrigen Medium und einem Metalloxid umfasst. Das Metalloxid wirkt dabei als Katalysator. Die Reaktionsbedingungen in dem Reaktor liegen bei einem Druck im Bereich von 1 bis 40 MPa und bei einer Temperatur im Bereich von 50 °C bis 300 °C.

Die DE 102 10 178 C1 lehrt beispielsweise, dass die Dichte von Biomasse für die Vergasung mittels überkritischem Wasser beim herrschenden Druck einen Wert von 0,2 Gramm pro Milliliter nicht unterschreiten sollte. Dabei wird nach dem offenbarten Verfahren ein wässriger Eduktstrom aus Biomasse erzeugt, der anschließend erwärmt und zusammen mit einem auf eine überkritische Temperatur erwärmten Wasserstrom in einen Reaktor eingebracht und vermischt wird.

In der EP 2 714 625 B1 wird ein Verfahren zum Umwandeln von Biomasse in Brennstoffe und Chemikalien offenbart. Das Verfahren umfasst das Bereitstellen eines Biomasseeinspeisestroms, der ein Lösungsmittel und einen festen Biomassebestandteil umfasst, wobei der feste Biomassebestandteil zerkleinert, geschreddert, gepresst oder gemahlen wurde. Danach erfolgt eine katalytische Umsetzung des Biomasseeinspeisestroms mit Wasserstoff und einem Rückbaukatalysator bei einer Rückbautemperatur und bei einem Rückbaudruck, um einen Produktstrom zu erzeugen, der eine Dampfphase, eine flüssige Phase und eine feste Phase umfasst.

Die in der Dampfphase vorhandenen, flüchtigen C₂₊O₁₋₂-Oxygenate werden aus der Flüssigphase und der festen Phase abgetrennt und in der Gegenwart eines Kondensationskatalysators umgesetzt, um eine C₄₊-Verbindung herzustellen.

Die DE 10 259 928 B4 lehrt ein Verfahren zur Behandlung von Biomasse, bei dem die Biomasse in einen Reaktor eingespeist wird, wobei der Reaktor bei einer Temperatur über 374°C und einem Druck über 22,1 MPa gehalten wird. In dem Reaktor ist überkritisches Wasser enthalten, in dem die Biomasse mit den sich aus der Reaktion mit dem überkritischen Wasser bildenden Zwischenprodukten durchmischt wird.

In der EP 3 428 130 B1 wird ein Verfahren zur Vergasung und Verstromung von feuchter Biomasse mit überkritischem Wasser offenbart. Dabei wird ein Edukt welches sich aus Trockenmasse und Wasser zusammensetzt, auf einen Druck von etwa 2,7 MPa gebracht und einem ersten Wärmeüberträger zugeführt wird, welcher die Suspension auf 225 °C erhitzt und nachfolgend bei dieser Temperatur die Suspension in einen Verflüssigungsreaktor leitet, worin sie 30 min auf der Temperatur gehalten wird, bevor sie anschließend auf den Vergasungsdruck von ca. 35 MPa gebracht wird. Nachfolgend durchläuft das Biomassegemisch einen zweiten Wärmeüberträger, in dem es durch Wärmeübertragung mit dem Vergasungsprodukt auf eine Temperatur von etwa 630 °C erhitzt wird. Dabei geht das Wasser in den überkritischen Zustand über und eine Vergasungsreaktion beginnt.

Das erhaltene Produktgas besteht hauptsächlich aus Kohlenstoffdioxid, Methan, Wasserstoff und Ethan. Für die notwendige CO₂-Abtrennung zur Gasaufbereitung ist Kühlung notwendig, wobei das Produktgas auf eine Temperatur von unter 30 °C gekühlt wird. Bei einem konstant hohen Druck ist sowohl CO₂ als auch Ethan flüssig und entsprechend im CO₂- und Ethan-Abscheider durch Phasentrennung abzuscheiden. Das verbleibende Brenngas, das sich aus Methan und Wasserstoff zusammensetzt, kann nun in dem vom Vergasungsprozess unabhängigen Verstromungsprozess verwertet werden.

Die EP 1 632 550 B1 lehrt ein Verfahren zur Umsetzung von Biomasse, wobei folgende Schritte durchlaufen werden müssen: Zunächst das Bereitstellen der Biomasse, wobei diese einen Wassergehalt von mindestens 50 % aufweisen muss. Es folgt das Aufheizen der Biomasse auf eine Temperatur zwischen 500°C und 700 °C bei einem Druck zwischen 22,1 MPa und 30 MPa. Dabei wird die Biomasse in überkritischem Wasser, d.h. oberhalb einer Temperatur von 374°C, bevorzugt zwischen 500°C und 700 °C, und einem Druck oberhalb von 22,1 MPa, aber nicht höher als 30 MPa, umgesetzt.

Keines der in Stand der Technik gefundenen Dokumente offenbart eine Lösung für den Prozess der Vergasung im überkritischen Wasser mit einer Erhöhung der Effizienz des Verfahrens. Ferner fehlt es an einer Lehre, wonach die Biomasse einer Viskositätsreduktion und Fließverbesserung unterzogen wird, die mittels einer gleichmäßigen, schnellen und effektiven Zerkleinerung der Biomasse stattfindet. Bedauerlicherweise fehlt es dem Stand der Technik auch an einer Lehre zur gezielten Reduktion bzw. Vernichtung von Mikroplastikverunreinigungen in Biomasse.

Vor diesem Hintergrund wurde die vorliegende Erfindung getätigt.

### BESCHREIBUNG DER ERFINDUNG

Die Erfindung betrifft ein Verfahren zum Erzeugen von Biogas, vorzugsweise von Wasserstoff, aus Biomasse, umfassend die folgenden Schritte:
a. Ultraschallbehandlung zur Desintegration der Biomasse, wobei die Frequenz der Ultraschallbehandlung mindestens 20 kHz beträgt,
b. Vergasung mit überkritischem Wasser, durch Aufheizen der verbleibenden Biomasse auf mindestens 600 °C bei einem Druck von mindestens 25 MPa, wobei vorzugsweise mittels schneller Aufheizrate der Biomasse die chemischen Reaktionen (i) und (ii) begünstigt werden:
   i.

      CHₓO_{y}+(2-y)H₂→CO₂+(2-y+x/2)H₂
   ii.

      CHₓO_{y}+(1-y)H₂→CO+(1-y+x/2)H₂

      wobei x das molare Verhältnis von H/C ist und y das molare Verhältnis von O/C der Biomasse darstellt,
c. Separieren der entstandenen Gase, wobei der Wasserstoff vorzugsweise bei einem Druck im Bereich von 8 bis 22 MPa gelagert wird.

Die Erfindung ist eine innovative Kombination von Ultraschall und der Vergasung im überkritischen Wasser (Super Critical Water Gasification - SCWG). Der Zellaufschluss mittels Ultraschall erlaubt den Erhalt einer niedrigviskosen Biomasse, woraus sich u.a. Phosphor und Stickstoff besser fällen lassen. Ebenso werden Schwermetalle - welche als Verunreinigungen in der Biomasse vorkommen - besser herausgelöst. Bevorzugt ist die Durchführung einer anorganischen Materialabscheidung nach der Ultraschallbehandlung (a). Dieser vorgelagerte Schritt der anorganischen Materialabscheidung erlaubt eine bessere Effizienz der SCWG, da weniger Feststoffe/Salze/anorganische Substanzen vorhanden sind. Ferner neutralisiert die SCWG das vorhandene Mikroplastik, da es u.a. zu CO₂ und H₂ umgesetzt wird.

Ein weiterer Vorteil des erfindungsgemäßen Verfahrens ist der Erhalt reines CO₂ am Ende des erfindungsgemäßen Verfahrens. Dieses so erhaltene CO₂ dient als Grundstoff für die chemische Industrie und kann aufgrund seiner Reinheit von über 90%, noch bevorzugter über 95%, und am meisten bevorzugt über 99%, dort eingesetzt werden.

Das erfindungsgemäße Verfahren ermöglicht eine positive Energiebilanz, wobei ausgehend von einem Durchsatz von 2t Biomasse pro Stunde ein Energieverbrauch der Ultraschalldesintegration von ca. 2 bis 10 kW entsteht. Der Energieverbrauch der optionalen Phosphorrückgewinnung beträgt ca. 8 kW und für den Betrieb des SCWG ist ein Energieverbrauch von ca. 216 kW erforderlich. Der Energieertrag, allein für das erhaltene H₂, in Höhe von ca. 281 kW pro Betriebsstunde, erlaubt den Erhalt einer positiven Bilanz.

Vorzugsweise wird das erfindungsgemäße Verfahren durchgeführt, wobei die Biomasse zu Beginn des Verfahrens einen Wassergehalt von mindestens 80% aufweist, wobei der Wassergehalt gemäß DIN EN 15934:2012-11 bestimmt ist. Noch bevorzugter ist ein Wassergehalt von 85%, noch mehr bevorzugt von 90%.

Je höher der Wassergehalt der Biomasse, desto geringer ist die Viskosität, wodurch der Ultraschallaufschluss effektiver funktioniert und vorzugsweise die Phosphor- sowie Stickstofffällung effizienter ist, und final die SCWG besser abläuft, was zu einem höheren Ertrag von Wasserstoff und CO₂ führt.

Bevorzugt wird das erfindungsgemäße Verfahren durchgeführt, wobei dem Schritt (a) eine mechanische Zerkleinerung der Biomasse vorausgeht.

Bevorzugt weist die Biomasse einen Plastikanteil, noch bevorzugter einen Mikroplastikanteil auf. Sehr bevorzugt ist dieser Anteil größer als 0,0001 Gew.%. Ebenfalls bevorzugt ist, dass die Plastikanteile eine maximale Partikelgröße von 0,5 mm aufweisen.

Die mechanische Zerkleinerung geschieht vorzugsweise mittels zerkleinern, schreddern, pressen oder mahlen. Dabei wird die Biomasse in eine niedrig viskosere Form überführt, welche zu einer schnelleren Desintegration via Ultraschallbehandlung führt und dadurch Zeit einspart, was einen höheren Durchsatz pro Betriebsstunde erlaubt und damit schlussendlich die Effektivität des gesamten Verfahrens steigert.

Ferner wird das erfindungsgemäße Verfahren insbesondere durchgeführt, wobei die Frequenz der Ultraschallbehandlung in Schritt (a) im Bereich von 20 kHz bis 10 MHz liegt, vorzugsweise im Bereich von 20 kHz bis 1 MHz. Dabei wird die Ultraschallbehandlung mit einer Frequenz von vorzugsweise 30 kHz bis 5 MHz, noch bevorzugter von 35 kHz bis 3500 kHz, noch bevorzugter von 40 kHz bis 400 kHz, am meisten bevorzugt von 40 kHz bis 207 kHz durchgeführt.

Dies erlaubt in Kombination mit einer angepassten Dauer der Ultraschallbehandlung einen effektiven Aufschluss der Biomasse.

Vorzugsweise beträgt die Dauer der Ultraschallbehandlung 1 bis 6 ms, noch bevorzugter 2 bis 5 ms und am meisten bevorzugt 3 bis 4 ms.

Dies ermöglicht, in Kombination mit der passenden Frequenz, dass der Radius, der sich bildenden Kavitationsblasen eine Größe von bis zu 150 µm annimmt und eine Implosion bewirkt. Damit wird eine gleichmäßige, schnelle und effektive Zerkleinerung der Biomasse erzielt, bei der vor allem Phosphor und Stickstoff in gebundener Form freigesetzt und durch die Zerstörung der Zellmembran der Phosphor- und Stickstofffällung zugänglich gemacht werden.

Bevorzugt weisen die Partikel eine mittlere Partikelgröße von 20 µm oder weniger auf. Vorzugsweise findet die Ultraschallbehandlung im direkten Kavitationsfeld von Hochleistungssonotroden im Bereich von Durchflußzellen statt. Dies hat den vorteilhaften Effekt, dass die Phosphorrückgewinnung bereits aus einer Biomasse mit einem eher geringen Potential zur Phosphorrückgewinnung durchgeführt werden kann, bei dem die Pflanzenverfügbarkeit von Phosphor normalerweise, sprich ohne die erfindungsgemäßen Verfahrensschritte, schlecht wäre. Zusätzlich sind die Kosten für den Verfahrensaufwand gering.

Gemäß einer noch bevorzugteren Ausführungsform des erfindungsgemäßen Verfahrens erfolgt nach Schritt a) eine moderate Ansäuerung der Biomasse, vorzugsweise erfolgt diese durch Verwendung von CO₂, bevorzugt aus der Gasaufbereitung oder aus dem BHKW-Abgas gewonnen. Damit wird wiederum die Verwendung von zusätzlichen Salzen vermieden.

Nach diesem Schritt, und noch vor dem optionalen Schritt a1), erfolgt vorzugsweise eine Fest-Flüssig-Trennung der desintegrierten und angesäuerten Biomasse.

Aus der flüssigen Phase kann unter Druck das CO₂ wieder ausgetrieben werden, bevor die optionale Phosphorrückgewinnung mittels chemischer Fällung des Ortho-Phosphats, vorzugsweise durch Magnesiumoxid, oder alternativ mit einer Calcium-oder einer weiteren Magnesiumverbindung, erfolgt.

Der besondere Vorteil dieser Ausführungsform ist die Wiederverwendung des entstandenen CO₂s, welches zur Drucklaugung zu der desintegrierten Biomasse gegeben wird und nach der Fest-Flüssig Separation dem System wieder entzogen wird. Es wird somit eine Kreislaufwirtschaft, bezogen auf das CO₂, zumindest teilweise hergestellt.

Weiter kann das erfindungsgemäße Verfahren bevorzugt durchgeführt werden, wobei der Schritt (a1) mittels Zugabe von Magnesiumoxid, vorzugsweise zur Flüssigphase, durchgeführt wird. Dies erlaubt die Ausfällung eines Feststoffs. Bei dem Feststoff handelt es sich vorzugsweise um Magnesiumammoniumphosphat (MAP). Vorzugsweise wird das Magnesiumoxid derart dosiert, dass das Verhältnis von Magnesium zu Phosphor 1,5 zu 1,0 beträgt.

Das ausgefällte MAP eignet sich hervorragend als Dünger, da die drei Hauptnährelemente (P, N, Mg) gleichzeitig ohne die Gegenionen Cl-, SO₄²⁻, Na⁺ vorhanden sind. Verunreinigungen durch Schwermetalle sind in MAP aus dem Phosphorrückgewinnungsschritt um zwei bis drei Größenordnungen geringer als in kommerziellen P-Düngern. Wegen der geringen Löslichkeit unter neutralen Reaktionsbedingungen ist MAP als kostengünstiger Ersatz für Dünger mit langsamer P-Nachlieferung oder als Komponente in anderen Düngemitteln sehr gut geeignet. Durch die Magnesiumoxid Dosierung von 1,5:1,0 wird ein Phosphorrückgewinnungsgrad von bis zu 80% erreicht.

Magnesiumammoniumphosphat kann insbesondere auch als Zwischenprodukt, z.B. für die weitere Verarbeitung zu Phosphorsäure, dienen. Ebenso kann Magnesiumammoniumphosphat durch eine geeignete Behandlung auch zu Ammoniakwasser oder zu einer Ammoniumsalzlösung bei gleichzeitiger Gewinnung von Magnesiumhydrogenphosphat, z.B. als Fällungsmittel für Ammoniumstickstoff aus wässriger Umgebung, verarbeitet werden.

Eine weitere, bevorzugte Ausführungsform des erfindungsgemäßen Verfahrens umfasst die Einstellung des pH-Wertes auf den Bereich von 8 bis 11, vorzugsweise auf den Bereich von 9,2 bis 10, vor Durchführung des Schrittes (a1). Bevorzugt wird dabei die Entfernung von CO₂ mittels CO₂-Stripping genutzt, um den pH-Wert einzustellen.

Die Erhöhung des pH-Wertes erlaubt die Anreicherung von PO₄³⁻, dem Phosphatanion, welches mittels Magnesiumoxids zusammen mit NH₄⁺ zu MAP (MgNH₄PO₄ * 6 H₂O) reagiert und als kristalliner Feststoff zurückbleibt. Zusätzlich wird durch die pH-Wert-Erhöhung mittels CO₂-Austrags vermieden, dass weitere anorganische Stoffe, vor allem anorganische Salze, als Eintrag in die Biomasse hinzugefügt werden. Dies erhöht die Effizienz und Effektivität der nachgelagerten Schritte im erfindungsgemäßen Verfahren. Durch das Ausgasen von CO₂ steigt der pH-Wert deutlich an. Gleichzeitig führt die Zugabe von Magnesium-Fällsalzen unter diesen Bedingungen zur Bildung und Ausfällung von MAP.

Die pH-Wert-Anhebung zur Phosphatausfällung durch CO₂-Stripping mit Druckluft und durch Rühren erlaubt eine höhere Effizienz und Effektivität der nachgelagerten SCWG. Die Phosphat-Ausfällung kann auch mit Kalkmilch (genannter Wert: 0,1 l Kalkmilch / m³ Filtrat/Zentrat) erfolgen, dabei wird Calciumdihydrogenphosphat (Ca(H₂PO₄)₂) ausgefällt, das Hauptbestandteil vom handelsüblichen Superphosphat ist.

Optional kann das resultierende Fällungsprodukt, in Abhängigkeit des verwendeten Fällungsmittels Di-(CaHPO₄), Tri-Calciumphosphat (Ca₃(PO₄)₂) oder auch das Magnesiumammoniumphosphat (MgNH₄PO₄ * 6 H₂O) weiterverarbeitet werden. Eine mögliche Weiterverarbeitungsvariante stellt dabei Phosphorsäure dar.

Eine weitere, bevorzugte Ausführungsform des erfindungsgemäßen Verfahrens trennt den ausgefällten Feststoff vor Durchführung des Schritts (b) ab.

Dies erlaubt eine Effizienzsteigerung der nachgelagerten SCWG. Feststoffe oder andere anorganische Materialien würden die Vergasung von organischem Material in superkritischem Wasser behindern, bzw. deren Effizienz reduzieren.

Ebenso wird das erfindungsgemäße Verfahren durchgeführt, wobei die Biomasse organischer Gewerbeabfall, Bioabfall aus Hausmüll, gesondert erfasster biologischer Siedlungsabfall, Küchenabfälle, Gartenabfälle (nasser Grünschnitt), Tierreststoffe, Ernteabfälle und Klärschlamm ist.

Dies hat den vorteilhaften Effekt, dass das Ausgangsmaterial aus einer Vielzahl beliebiger Möglichkeiten gewonnen werden kann, was das erfindungsgemäße Verfahren unabhängig von bestimmten örtlichen Gegebenheiten macht, und eine breite Anwendbarkeit ermöglicht.

Bevorzugt wird das erfindungsgemäße Verfahren durchgeführt, wobei der Schritt (b) bei einer Temperatur im Bereich von 600 °C - 700 °C durchgeführt wird und der Druck im Bereich von 25 bis 30 MPa liegt.

Dies ermöglicht es, in vorteilhafterweise den Ertrag von H₂ im Verhältnis zu Methan und CO/CO₂ auf bis zu 79% zu steigern. Am meisten bevorzugt ist dafür eine Kombination von 600 °C bei 28 MPa Druck, noch bevorzugter von 660 °C und 28 MPa. Dabei kann die Biomasse effizient umgesetzt werden, weil sie ohne vorherige Trocknung thermochemisch umgewandelt werden kann. Dabei fungiert Wasser als Reaktionsmedium und ermöglicht, dass dieser Prozessschritt einstufig abläuft.

Besonders bevorzugt wird das erfindungsgemäße Verfahren durchgeführt, wobei der Wassergehalt der Biomasse zu Beginn des Schrittes (b) bis zu 95%, bevorzugter bis zu 97%, beträgt und der Wassergehalt gemäß DIN EN 15934:2012-11 bestimmt ist.

Dies hat den vorteilhaften Effekt, dass das Ausgangsmaterial, ergo die desintegrierte und von Salzen und anderen anorganischen Materialien befreite Biomasse, mit einem hohen Wassergehalt verwendet werden kann und nicht getrocknet werden muss, wodurch die Energieeffizienz des gesamten Verfahrens erhalten bleibt, auch bei steigendem Wassergehalt, im Vergleich zur konventionellen Vergasung oder Pyrolyse. Besonders bevorzugt wird das erfindungsgemäße Verfahren ausgeführt, wobei die Aufheizrate derart gewählt ist, dass der Temperaturbereich der Biomasse zwischen 330 °C und 370 °C in weniger als 30 Sekunden durchschritten wird.

Dieses hat den vorteilhaften Effekt, dass der kritische Temperaturbereich der Teer- und Koksbildung, der zwischen 330 und 370 °C liegt, schnell durchschritten wird, um einen hohen Kohlenstoffumsatz zu gewährleisten. Die Verweilzeit in diesem Temperaturbereich sollte deswegen unter 30s liegen, vorzugsweise unter 25s, noch bevorzugter unter 20s.

Dies hat den weitern vorteilhaften Effekt, dass die Bildung von Koks, Furanen etc. unterbunden bzw. stark reduziert wird.

Ebenso bevorzugt wird das erfindungsgemäße Verfahren durchgeführt, wobei die Biomasse in Schritt (c) eine Verweilzeit von 1 bis 7 Minuten hat, vorzugsweise von 2 bis 5 Minuten, vorzugsweise bei einer Temperatur im Bereich von 600 °C - 700 °C und einem Druck im Bereich von 25 bis 30 MPa.

Dies hat den vorteilhaften Effekt, dass durch die kurze Verweilzeit pro Tonne Biomasse weniger Energie zur Erzeugung der SCWG-Bedingungen nötig ist und gleichzeitig ein hoher Ertrag möglich ist, da mehr Biomasse umgesetzt werden kann.

Auch wird das erfindungsgemäße Verfahren bevorzugt durchgeführt, wobei der Wassergehalt der Biomasse zu Beginn von Schritt (b) mindestens 85% beträgt und der Wassergehalt gemäß DIN EN 15934:2012-11 bestimmt ist.

Dies hat den vorteilhaften Effekt, dass die H₂-Bildung bevorzugt wird, da die Methanbildung exotherm ist und überraschend gefunden wurde, dass ein großer Wasserüberschuss und höhere Temperaturen die Wasserstoffbildung begünstigen.

Vorzugsweise wird das erfindungsgemäße Verfahren durchgeführt, wobei der Schritt (c) eine CO₂-Wäsche umfasst.

Dies hat den vorteilhaften Effekt, dass der Anteil von H₂ erhöht wird, auf über 90%vol, vorzugsweise auf über 95%vol, gemessen an dem gesamten Volumen von entstandenem Gas.

Vorzugsweise wird das erfindungsgemäße Verfahren durchgeführt, wobei das CO₂ gespeichert und nicht emittiert wird.

Dies hat den vorteilhaften Effekt, dass bei dem erfindungsgemäßen Verfahren keine zusätzlichen Treibhausgase freigesetzt werden.

Besonders bevorzugt wird das erfindungsgemäße Verfahren ausgeführt, wobei die Absorption des CO₂s mittels Laugen-Druckwäsche erfolgt, wobei die Lauge zur Regeneration und Abscheidung des CO₂ entspannt wird. Besonders bevorzugt handelt es sich um eine Aminwäsche.

Dies hat den vorteilhaften Effekt, dass die Absorption von CO₂ mittels eines Amin/Wasser-Gemisches geschieht, in dem sich zunächst das CO₂ im Wasser löst und Kohlensäure bildet. Die entstandene Kohlensäure zerfällt danach zu H⁺ und HCO₃₋-⁻ -Ionen. Diese reagieren mit dem Amin. Somit wird das absorbierte CO₂ chemisch reversibel gebunden. Das chemische Gleichgewicht wird erst bei einer deutlich höheren Beladung des Amin/Wasser-Gemisches erreicht.

Ebenso bevorzugt ist das erfindungsgemäße Verfahren, wobei kleine Kunststoffteilchen mit einem Durchmesser unter 5 mm, die in der Biomasse vorhanden sein können und durch die Bedingungen von Schritt (b) zersetzt werden. Bei Kunststoffteilchen mit einem Durchmesser von weniger als 5 mm spricht man gemeinhin von Mikroplastik.

Dies hat den vorteilhaften Effekt, dass jeglicher Feststoff am Ende von Schritt (c) zur landwirtschaftlichen Verwendung freigegeben ist, ohne dass eine Belastung mit Mikroplastik vorhanden ist.

### BEISPIELE

Vorliegend wurde mit Maissilage der Sorte Dodge mit einem Trockensubstanz Gehalt von 36,7 Gew. % begonnen. Die Zusammensetzung der Trockensubstanz war: C 44,3; O 42,8; H 6,3; N 1,05; K 3,2; Ca 0,38; Fe 0,05; Cl 0,74; Si 0,55; S 0,3; P 0,3 (alle Werte in Gew. %).

Mittels Verdünnung mit Wasser wurde eine Konzentration (TS) von 9,2 Gew. % erzielt. Eine mit rotierenden Messern bestückte Apparatur wurde eingesetzt, um die Biomasse bis auf wenige Millimeter zu zerkleinern. Dies wird als Vorstufe der Ultraschall-Desintegration bezeichnet und umfasst generell die mechanische, thermische, chemische oder biologische Auflösung von Agglomeration. Es wurde optional ein zweiter Zerkleinerungsschritt mit einer Kolloidmühle durchgeführt.

Nach dieser Behandlung bestanden 84 % der gesamten Masse aus Partikeln kleiner 0,5 Millimeter. Diese Suspension war gut pumpbar und hatte eine ausreichende Viskosität.

Durch Hochleistungs-Ultraschall wird ein Aufschluss der Biomasse mit positiver Energiebilanz erreicht. Diese erfolgt durch Kavitation, deren freigesetzte Kräfte die Oberflächen von Zellen, Bakterien etc. zerstören. Der Zellaufschluss durch Hochleistungs-Ultraschall liefert eine Effizienzsteigerung der SCWG, da die Biomasse vorkonditioniert wird.

Unbehandelte Biomasse diente als Referenz gegenüber Biomasse nach Hochleistungs-Ultraschallbehandlung (3 kWh/m³). Die mittlere Temperatur im Reaktor lag bei 637 °C und die mittlere Verweilzeit lag dort bei 137 sec. Die Versuchsdauer betrug 19 h. Der Druck betrug 28 MPa.

Die unbehandelte Biomasse lieferte einen Energieertrag von H₂ 6,50 W, CH₄ 7,38 W, C₂H₆ 3,30 W, zzgl. Spurengase 19 W. Die liefert hochgerechnet 8 kW, wobei auf einen Durchsatz von 1 kg TOC pro Stunde, mit rund 87 kg/h Durchsatz, abgestellt wurde. Die vorbehandelte Biomasse, nach Hochleistungs-Ultraschallbehandlung, lieferte einen Energieertrag von H₂ 7,54 W, CH₄ 10,81 W, C₂H₆ 6,11 W, zzgl. Spurengase 26 W, was hochgerechnet einem Energieertrag von 11 kW entspricht. Dies entspricht einer Steigerung von 37 %.

Nach Zellaufschluss mittels Hochleistungs-Ultraschall konnte der Energieertrag der SCWG um mehr als 30% gesteigert werden.

In dem vorliegenden wässrigen Medium der Biomasse bewirken Ultraschallwellen eine periodische Kompression (Druck) und Dehnung (Zug, Unterdruck) des organischen Materials. Ultraschall hoher Intensität führt in der Phase des Unterdrucks zum Aufreißen der Wasserphase, was zur Bildung von mikroskopisch kleinen Hohlräumen in der Flüssigkeit führt. Diese Bläschen füllen sich mit Wasserdampf oder Gas. Sie wachsen in Zugphasen und schrumpfen in Druckphasen, bis sie implodieren. Dieses Ereignis wird als Kavitation bezeichnet und findet vorliegend unter extremen (adiabatischen) Bedingungen statt. Im Mikromaßstab entstehen dabei Drücke von 50 MPa und Temperaturen von 5.000 °C. Im Frequenzbereich von 20 bis 100 kHz werden besonders große Kavitationsblasen erzeugt, die beim Zerfall extreme mechanische Scherkräfte hervorrufen.

Der vorliegend angewandte Ultraschall mit hoher Intensität von 20 kHz bis 10 MHz bewirkt einen Aufschluss von Biomasse. Die Beschallzeit ist kurz, im Bereich von 1 bis 6 ms, und erlaubt den Aufschluss von Agglomeraten der Biomasse. Die Gesamtoberfläche der entstandenen Biomassesuspension wird damit vergrößert. Eine weitergehende Beschallung mit einer Intensität von 40 bis 400 kHz ermöglicht den Aufschluss von Biomassezellen, sodass deren Zellinhaltsstoffe austreten und in Lösung gehen. In der vorliegenden Bakterien-Biomasse werden dabei Enzyme freigesetzt. Die Ultraschall-Desintegration der Biomasse ermöglicht es die Effizienz der Fällung von anorganischen Stoffen wie Phosphor und Stickstoff signifikant zu erhöhen.

Die desintegrierte Biomasse dient als Grundlage für die optionale weitere Ausfällung von Phosphor.

Phosphor ist eine wichtige und begrenzte Ressource. Der Phosphatabbau ist mit den üblichen ökologischen Zerstörungen des Bergbaus belastet, noch verstärkt dadurch, dass sich Phosphate meist mit radioaktiven Metallen wie Uran oder mit Cadmium vergesellschaftet finden. Es ist daher sinnvoll und notwendig, Stoffkreisläufe zu schließen und Phosphor aus verschiedenen Sekundärrohstoffen zurückzugewinnen. Dadurch werden die natürlichen Ressourcen geschont und die Abhängigkeit von den wenigen Exportländern minimiert.

Phosphor liegt in Biomasse, ebenso wie Stickstoff in (an)organischen Verbindungen vor. Diese Inhaltstoffe der Biomasse können den nachgelagerten Prozess der hydrothermalen Vergasung beeinträchtigen. Daher wird die Biomasse optional um diese anorganischen Verbindungen entfrachtet. Der durch die vorgelagerte Ultraschall-Desintegration erfolgte Zellaufschluss der Biomasse führt zur Freisetzung des Phosphors und anderer, organischer Verbindungen aus den Zellen in die wässrige Phase. Durch die Beifügung von Magnesiumoxid (MgO) können Phosphor und Stickstoff ausgefällt werden.

Hierzu kann das Biomasse-Edukt, das während der Desintegration einen Trockenmasse Anteil von ca. 10 % aufweist, durch das Einpressen von während der hydrothermalen Vergasung von Biomasse (SCWG) gewonnenem CO₂ angesäuert werden. Danach kann die Fest-Flüssig-Separation (Druckfiltration) erfolgen. Bei entsprechender pH-Wert-Einstellung wird zusätzlich zum Phosphor auch Stickstoff in das Fällungsprodukt eingebunden.

In der flüssigen Phase erfolgt optional die chemische Fällung unter Zugabe von Magnesiumoxid als Magnesiumammoniumphosphat (MgNH₄PO₄* 6 H₂O). Das Fällungsprodukt wird nachfolgend aus der wässrigen Phase abgeschieden. Das in das Fällungsprodukt Magnesiumammoniumphosphat integrierte Phosphat kann durch weitere, externe Behandlung zu einem in industriellen Produktionsprozessen benötigten Produkt verarbeitet werden.

Da das CO₂ vor der optionalen Phosphor-Rückgewinnung aus der Flüssigphase wieder vollständig aus dem Edukt ausgetrieben wird, ist für die pH-Wert-Anhebung auf den Ausgangswert keine Zugabe von Alkalisierungsmittel (Natronlauge oder Kalk) erforderlich. Dadurch wird eine weitere Aufsalzung der Flüssigphase verhindert. Nachfolgend werden beide Stoffströme wieder zusammengeführt und an die hydrothermale Vergasung weitergeleitet.

Bei der durchgeführten hydrothermalen Vergasung wird die aufgeschlossene Biomasse ohne vorherige Trocknung umgewandelt, wobei das vorhandene Wasser bei den herrschenden hohen Temperaturen von 600 - 700 °C und Drücken im Bereich von 25 - 28 MPa als Reaktionsmedium eingesetzt wird. Bei der Vergasung mit überkritischem Wasser unten diesen Bedingungen erfolgt die Umwandlung des organischen Materials in Wasserstoff, Kohlenstoffdioxid und Methan, in geringeren Mengen werden auch höhere Kohlenwasserstoffe (Ethan, Butan) und Kohlenstoffmonoxid gebildet. Konkret waren die Bedingungen wie folgt: Der Durchfluss wurde auf 50 kg/h eingestellt. Die Tₘₐₓ (im Reaktor) betrugt 640°C, bei einem Druck von 28 MPa. Die mittlere Verweilzeit betrug 4 min.

Aktiviert war auch der Sumpfabzug. Dabei wird vom unteren Teil des Reaktors diskontinuierlich, aber mit hohem Durchsatz (stoßweise, mittlerer Durchfluss 2 kg/h), Reaktionsgemisch abgezogen. Dort werden eventuelle Reaktionsrückstände erwartet. Es gab keinerlei Anzeichen einer Blockierung (Durchflussunterbrechung) des Wärmetauschers. Dies ist ein Indiz für die Wirksamkeit des Sumpfabzuges. Das Produktgas wurde in der zweiten Stufe der Druckregelung behandelt und das CO₂ abgetrennt. Das Produktgas CO₂ wurde direkt in Hochdruckflaschen abgefüllt. Vorteilhafterweise verfügt das Gesamtsystem über einen Druck von 28 MPa, wobei dieser sich aus den Partialdrücken der einzelnen Gase, i.e. vor allem H₂ und CO₂ ergibt. Nach der CO₂ Abscheidung liegt H₂ dann bei einem Druck im Bereich von 8 bis 22 MPa vor.

Es entstehen bei dieser Umsetzung von Biomasse mit überkritischem Wasser keine giftigen Stick- oder Schwefeloxide, und Kohlenstoffmonoxid tritt nur als Spurenkomponente auf. Da das SCWG-Produktgas bereits unter Druck steht, wird für weitere Kompression wenig Energie benötigt und das enthaltene Kohlenstoffdioxid lässt sich einfach abtrennen. Der hohe Wasserstoffanteil macht das Gasgemisch zu einem wertvollen, sauberen Brennstoff.

Bereits ab einer Konzentration von nur 2 Gew.% organisch gebundenem Kohlenstoff ist der Prozess energetisch autark. Bei höheren Konzentrationen ist der Energiegehalt des Produktgases wesentlich höher als der Energieverbrauch, der benötigt wird, um den Prozess aufrecht zu erhalten. Für die Aufrechterhaltung des Prozesses muss Energie aufgewandt werden um u.a. die Heizung und die Pumpen zu betreiben.

Die Ausführungsform 1 der vorliegenden Erfindung ist ein Verfahren zum Erzeugen von Biogas, vorzugsweise von Wasserstoff und Kohlenstoffdioxid, aus Biomasse, umfassend die folgenden Schritte:
a. Ultraschallbehandlung zur Desintegration der Biomasse, wobei die Frequenz der Ultraschallbehandlung mindestens 20 kHz beträgt,
b. Vergasung mit überkritischem Wasser, durch Aufheizen der verbleibenden Biomasse auf über 600 °C bei einem Druck größer als 25 MPa, vorzugsweise begünstigt eine schnelle Aufheizrate der Biomasse folgende chemische Reaktionen (i) und (ii):
   i.

      CHₓO_{y}+(2-y)H₂→CO₂+(2-y+x/2)H₂
   ii.

      CHₓO_{y}+(1-y)H₂→CO+(1-y+x/2)H₂

      wobei x das molare Verhältnis von H/C ist und y das molare Verhältnis von O/C der Biomasse darstellt,
c. Separieren der entstandenen Gase, wobei der Wasserstoff vorzugsweise bei einem Druck im Bereich von 8 bis 22 MPa gelagert wird.

Eine Ausführungsform 2 umfasst das Verfahren nach Ausführungsform 1, wobei die Biomasse zu Beginn des Verfahrens einen Wassergehalt von mindestens 80% aufweist, wobei der Wassergehalt gemäß DIN EN 15934:2012-11 bestimmt ist.

Eine Ausführungsform 3 umfasst das Verfahren nach einem der vorherigen Ausführungsformen, wobei dem Schritt (a) eine mechanische Zerkleinerung der Biomasse vorausgeht.

Eine Ausführungsform 4 umfasst das Verfahren nach einem der vorherigen Ausführungsformen, wobei die Frequenz der Ultraschallbehandlung in Schritt (a) im Bereich von mindestens 20 kHz bis 10 MHz liegt, vorzugsweise im Bereich von 20 kHz bis 1 MHz.

Eine Ausführungsform 5 umfasst das Verfahren nach einem der vorherigen Ausführungsformen, wobei die Biomasse organischer Gewerbeabfall, Bioabfall aus Hausmüll, gesondert erfasster biologischer Siedlungsabfall, Küchenabfälle, Gartenabfälle (nasser Grünschnitt), Tierreststoffe, Ernteabfälle und Klärschlamm ist, und/oder wobei kleine Kunststoffteilchen mit einem Durchmesser unter 5 mm durch die Bedingungen von Schritt (b) zersetzt werden.

Eine Ausführungsform 6 umfasst das Verfahren nach einem der vorherigen Ausführungsformen, wobei der Schritt (b) bei einer Temperatur im Bereich von 600 °C - 700 °C durchgeführt wird und der Druck im Bereich von 25 bis 30 MPa liegt, und/oder wobei die Biomasse in Schritt (b) eine Verweilzeit unter den beanspruchten Bedingungen von 1 bis 7 Minuten hat, vorzugsweise von 2 bis 5 Minuten.

Eine Ausführungsform 7 umfasst das Verfahren nach einem der vorherigen Ausführungsformen, wobei der Wassergehalt der Biomasse zu Beginn des Schrittes (b) im Bereich von 85% - 95% beträgt, wobei der Wassergehalt gemäß DIN EN 15934:2012-11 bestimmt ist.

Eine Ausführungsform 8 umfasst das Verfahren nach einem der vorherigen Ausführungsformen, wobei ein Schritt (a1) nach dem Schritt a und vor dem Schritt (b) durchgeführt wird, wobei der Schritt (a1) die Phosphorrückgewinnung umfasst, wobei die Phosphorrückgewinnung nach der Desintegration der Biomasse stattfindet und die Phosphorrückgewinnung vorzugsweise zusammen mit einer Stickstoffrückgewinnung mittels Magnesiumoxid durchgeführt wird.

Eine Ausführungsform 9 umfasst eine Anlage zur Durchführung eines der Verfahren nach einem der vorherigen Ausführungsformen, wobei die Anlage mindestens eine Homogenisierungsvorrichtung, mindestens eine Zellaufschluss-Hochleistungsultraschall Vorrichtung sowie mindestens eine Hydrothermale Vergasungsanlage umfasst.

Eine Ausführungsform 10 umfasst die Anlage gemäß Ausführungsform 9, wobei die Hydrothermale Vergasungsanlage ferner mindestens einen Wärmetauscher sowie mindestens einen Hydrothermalen Vergasungsreaktor umfasst.

### FIGURENBESCHREIBUNG

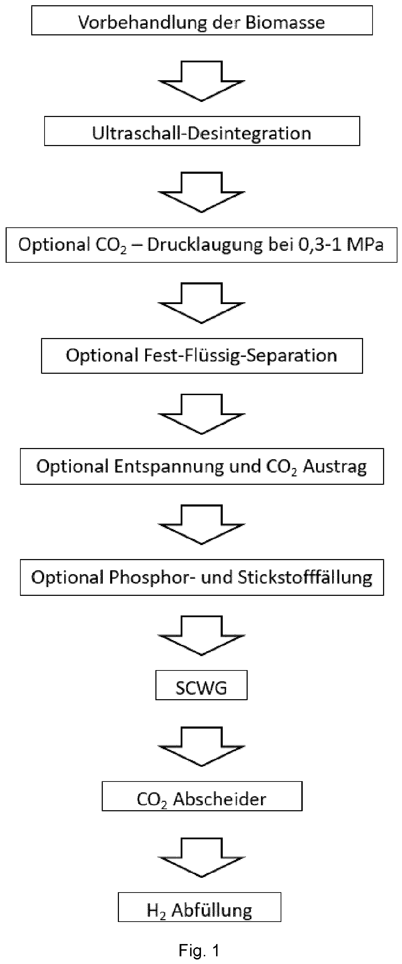

Fig. 1 zeigt beispielhaft eine Ausführungsform des erfindungsgemäßen Verfahrens, wobei die Vorbehandlung der Biomasse mechanische Zerkleinerung, die Zugabe von Wasser zur weiteren Reduktion des Feststoffgehalts oder anderweitige, vorteilhafte Behandlungen umfasst. Ziel ist es die Viskosität so weit abzusenken, dass eine erfolgreiche Ultraschall-Desintegration im Anschluss daran stattfinden kann.

Die optionale anschließende Drucklaugung mit Kohlenstoffdioxid dient vorteilhafterweise der Vorbereitung zur Phosphor- und Stickstoffeliminierung. Mittels der sich ebenfalls optionalen anschließenden Fest-Flüssig-Separation werden bereits ausgefällte Feststoffe abgeschieden und das in der flüssigen Phase verbleibende Phosphor sowie der restliche Stickstoff können nach dem Austrag von Kohlenstoffdioxid mittels Magnesiumoxid ausgefällt werden. Dies erlaubt die Durchführung der SCWG mit einer hohen Effizienz, ohne die Bildung von Koks, Teer sowie unter Vermeidung von Korrosion durch anorganische Reste. Die anschließende CO₂-Abscheidung erlaubt nicht nur eine positive CO₂-Bilanz, sondern auch die Aufreinigung des verbleibenden Produktgases Wasserstoff, welcher dann im letzten Schritt bei bestehendem Druck im Bereich von 8 bis 22 MPa abgefüllt werden kann und zur weiteren Verwendung zur Verfügung steht.

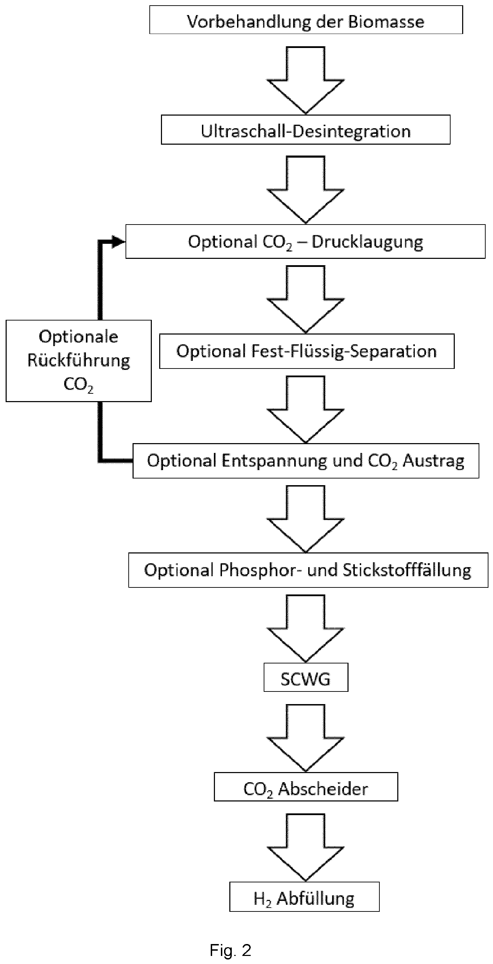

Fig. 2 zeigt beispielhaft eine weitere Ausführungsform des erfindungsgemäßen Verfahrens, wobei die Vorbehandlung der Biomasse mechanische Zerkleinerung, die Zugabe von Wasser zur weiteren Reduktion des Feststoffgehalts oder anderweitige vorteilhafte Behandlungen umfasst. Ziel ist es, die Viskosität so weit abzusenken, dass eine erfolgreiche Ultraschall-Desintegration im Anschluss daran stattfinden kann.

Die optionale anschließende Drucklaugung mit Kohlenstoffdioxid dient vorteilhafterweise der Vorbereitung zur Phosphor- und Stickstoffeliminierung. Hierbei kann optional das hinzugefügte Kohlenstoffdioxid aus dem Verfahrensprozess selbst gewonnen und recycelt. Diese Rückführung und somit Wiederverwendung von Kohlenstoffdioxid erlaubt die vorteilhafte Umsetzung der Kreislaufwirtschaft in dem erfindungsgemäßen Verfahren, da im Prozess entstandenes CO₂ auch von dem Prozess wieder verwendet wird. Mittels der sich optional anschließenden Fest-Flüssig-Separation werden bereits ausgefällte Feststoffe abgeschieden. Das in der flüssigen Phase verbleibende Phosphor sowie der restliche Stickstoff können nach dem Austrag von Kohlenstoffdioxid mittels Magnesiumoxid ausgefällt werden. Die anschließende CO₂-Abscheidung erlaubt nicht nur eine positive CO₂-Bilanz, sondern auch die Aufreinigung des verbleibenden Produktgases Wasserstoff, welcher dann im letzten Schritt bei bestehendem Druck im Bereich von 8 bis 22 MPa abgefüllt werden kann und zur weiteren Verwendung zur Verfügung steht.

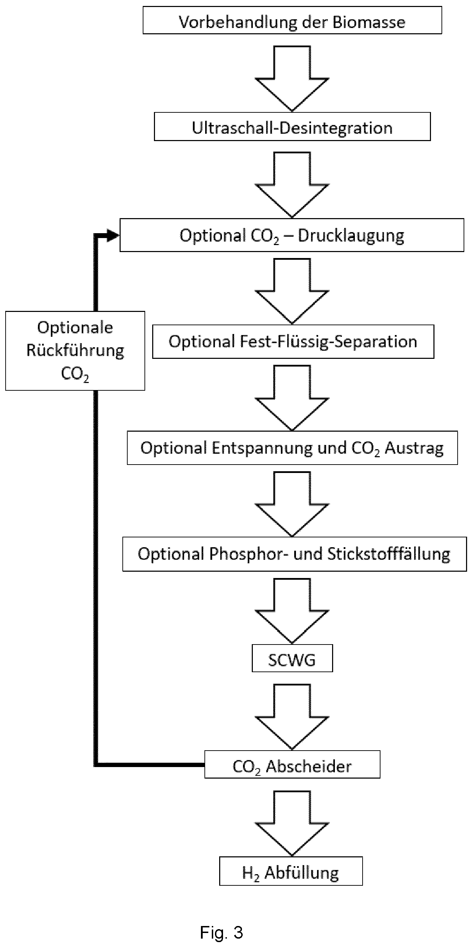

Fig. 3 zeigt beispielhaft eine weitere Ausführungsform des erfindungsgemäßen Verfahrens, wobei die Vorbehandlung der Biomasse mechanische Zerkleinerung, die Zugabe von Wasser zur weiteren Reduktion des Feststoffgehalts oder anderweitige vorteilhafte Behandlungen umfasst. Ziel ist es, die Viskosität so weit abzusenken, dass eine erfolgreiche Ultraschall-Desintegration im Anschluss daran stattfinden kann.

Die optionale anschließende Drucklaugung mit Kohlenstoffdioxid dient vorteilhafterweise der Vorbereitung zur Phosphor- und Stickstoffeliminierung. Hierbei wird das hinzugefügte Kohlenstoffdioxid aus dem Verfahrensprozess selbst gewonnen und recycelt, wobei in dieser Ausführungsform erst das im Anschluss an die SCWG abgeschiedene CO₂ zur Drucklaugung verwendet wird. Diese Rückführung und somit Wiederverwendung von Kohlenstoffdioxid erlaubt ebenso die vorteilhafte Umsetzung der Kreislaufwirtschaft in dem erfindungsgemäßen Verfahren, da im Prozess entstandenes CO₂ auch teilweise von dem Prozess wieder verwendet wird. Mittels der sich optional anschließenden Fest-Flüssig-Separation werden bereits werden die in der Biomasse-Suspension enthaltenen, organischen Feststoffe abgeschieden. Das in der flüssigen Phase verbleibende Phosphor sowie der restliche Stickstoff können nach dem Austrag von Kohlenstoffdioxid mittels Magnesiumoxid ausgefällt werden. Dies erlaubt die Durchführung der SCWG mit einer hohen Effizienz, ohne die Bildung von Koks, Teer sowie unter Vermeidung von Korrosion durch anorganische Reste. Die anschließende CO₂-Abscheidung erlaubt nicht nur eine positive CO₂-Bilanz, sondern auch die Aufreinigung des verbleibenden Produktgases Wasserstoff, welcher dann im letzten Schritt bei bestehendem Druck im Bereich von 8 bis 22 MPa abgefüllt werden kann und zur weiteren Verwendung zur Verfügung steht.

## Patentansprüche

1. Verfahren zum Erzeugen von Biogas, vorzugsweise von Wasserstoff und Kohlenstoffdioxid, aus Biomasse, umfassend die folgenden Schritte:
a. Ultraschallbehandlung zur Desintegration der Biomasse, wobei die Frequenz der Ultraschallbehandlung mindestens 20 kHz beträgt,
b. Aufheizen der verbleibenden Biomasse auf über 600 °C bei einem Druck größer als 25 MPa, vorzugsweise mit einer schnellen Aufheizrate der Biomasse um die chemischen Reaktionen (i) und (ii) zu begünstigen:
i.
CHₓO_{y}+(2-y)H₂→CO₂+(2-y+x/2)H₂
ii.
CHₓO_{y}+(1-y)H₂→CO+(1-y+x/2)H₂
wobei x das molare Verhältnis von H/C ist und y das molare Verhältnis von O/C der Biomasse darstellt,
c. Separieren der entstandenen Gase, wobei der Wasserstoff vorzugsweise bei einem Druck im Bereich von 8 bis 22 MPa gelagert wird.

2. Verfahren nach Anspruch 1, wobei die Biomasse zu Beginn des Verfahrens einen Wassergehalt von mindestens 80% aufweist, wobei der Wassergehalt gemäß DIN EN 15934:2012-11 bestimmt ist.

3. Verfahren nach einem der vorherigen Ansprüche, wobei dem Schritt (a) eine mechanische Zerkleinerung der Biomasse vorausgeht.

4. Verfahren nach einem der vorherigen Ansprüche, wobei die Frequenz der Ultraschallbehandlung in Schritt (a) im Bereich von mindestens 20 kHz bis 10 MHz liegt, vorzugsweise im Bereich von 20 kHz bis 1 MHz.

5. Verfahren nach einem der vorherigen Ansprüche, wobei die Biomasse organischer Gewerbeabfall, Bioabfall aus Hausmüll, gesondert erfasster biologischer Siedlungsabfall, Küchenabfälle, Gartenabfälle (nasser Grünschnitt), Tierreststoffe, Ernteabfälle und Klärschlamm ist, und/oder wobei kleine Kunststoffteilchen mit einem Durchmesser unter 5 mm durch die Bedingungen von Schritt (b) zersetzt werden.

6. Verfahren nach einem der vorherigen Ansprüche, wobei der Schritt (b) bei einer Temperatur im Bereich von 600 °C - 700 °C durchgeführt wird und der Druck im Bereich von 25 bis 30 MPa liegt, und/oder wobei die Biomasse in Schritt (b) eine Verweilzeit unter den beanspruchten Bedingungen von 1 bis 7 Minuten hat, vorzugsweise von 2 bis 5 Minuten.

7. Verfahren nach einem der vorherigen Ansprüche, wobei der Wassergehalt der Biomasse zu Beginn des Schrittes (b) im Bereich von 85% - 95% beträgt, wobei der Wassergehalt gemäß DIN EN 15934:2012-11 bestimmt ist.

8. Verfahren nach einem der vorherigen Ansprüche, wobei ein Schritt (a1) nach dem Schritt (a) und vor dem Schritt (b) durchgeführt wird, wobei der Schritt (a1) die Phosphorrückgewinnung umfasst, wobei die Phosphorrückgewinnung nach der Desintegration der Biomasse stattfindet und die Phosphorrückgewinnung vorzugsweise zusammen mit einer Stickstoffrückgewinnung mittels Magnesiumoxid durchgeführt wird.

9. Verfahren nach einem der vorherigen Ansprüche, wobei der Schritt (a1) mittels Zugabe von Magnesiumoxid durchgeführt wird, wodurch ein Feststoff ausgefällt wird, bei dem Feststoff handelt es sich vorzugsweise um Magnesiumammoniumphosphat (MgNH₄PO₄ *6 H₂O), vorzugsweise wird das Magnesiumoxid derart dosiert, dass das Verhältnis von Magnesium zu Phosphor 1,5 zu 1,0 beträgt.

10. Verfahren nach einem der vorherigen Ansprüche, wobei der pH-Wert vor Durchführung des Schrittes (a1) auf den Bereich von 8 bis 11, vorzugsweise auf den Bereich von 9,2 bis 10, eingestellt wird, vorzugsweise durch die Entfernung von CO₂ mittels CO₂-Stripping.

11. Verfahren nach einem der vorherigen Ansprüche, wobei der ausgefällte Feststoff vor Schritt (b) abgetrennt wird und/oder wobei der Schritt (c) eine CO₂-Wäsche umfasst.

12. Anlage zur Durchführung des Verfahrens nach einem der vorhergehenden Ansprüche, wobei die Anlage mindestens eine Homogenisierungsvorrichtung, mindestens eine Zellaufschluss-Hochleistungsultraschall Vorrichtung sowie mindestens eine Hydrothermale Vergasungsanlage umfasst.

13. Anlage nach Anspruch 12, wobei die Hydrothermale Vergasungsanlage ferner mindestens einen Wärmetauscher sowie mindestens einen Hydrothermalen Vergasungsreaktor umfasst.
